# EUROPEAN PATENT APPLICATION

(11) **EP 2 402 138 A1**
(43) Date of publication of application: **04.01.2012**
(21) Application number: 10745964.6
(22) Date of filing: 23.02.2010
(51) Int. Cl.: B29C 45/00, B29C 45/26, B29C 45/56, B29C 45/70, B29C 45/77, B29K 105/04

(54) **INJECTION FOAM MOLDING METHOD AND APPARATUS THEREFOR**

(30) Priority: 27.02.2009 JP 2009046899
(71) Applicant: Prime Polymer Co., Ltd., Tokyo 105-7117 (JP)
(72) Inventor: OBARA, Tomoyuki, Sodegaura-shi Chiba 299-0265 (JP)
(74) Representative: Prop, Gerrit
(86) International application number: PCT/JP2010/001197
(87) International publication number: WO 2010/098077

(57) **Abstract**

After introducing gas into a cavity (113) of a clamped die to boost a pressure therein, a resin material (X) containing a foaming agent is injected. After forming a skin layer, at the same time as a start of a core-back operation for foaming the resin material (X) or after the core-back operation, gas in the cavity (113) is vacuum-suctioned to make a pressure in the cavity (113) less than the atmospheric pressure. By cooling and solidifying, an injection foam molded article is obtained. Before complete solidification, gas between the resin material (X) and an inner surface of the die (110) is reliably discharged out of the cavity (113), so that surface recesses and generation of swirl marks due to gas accumulation can be prevented.

## Description

### TECHNICAL FIELD

The present invention relates to an injection foam molding method for forming an injection foam molded article by injecting a thermoplastic resin containing a foaming agent, and an apparatus thereof.

### BACKGROUND ART

Injection foam molded articles have typically been used as, for instance, a door trim and the like in automobiles. Various methods have been known as an injection foam molding method for providing such injection foam molded articles (see, for instance, Patent Literatures 1 to 3).

In an injection foam molding method disclosed in Patent Literature 1, when a molten resin is fed in a cavity pressurized with a pressurizing gas, the gas in an unfilled part of the cavity is discharged and vacuum-suctioned, thereby instantly reducing pressure and facilitating filling of the molten resin.
However, in the method disclosed in Patent Literature 1 that the pressurizing gas is discharged while the cavity partially remains unfilled, a so-called swirl mark is generated at a part corresponding to an unfilled part of an injection foam molded article, thereby impairing its appearance.

In a method disclosed in Patent Literature 2, a counter pressure method for preventing generation of a swirl mark is employed. Specifically, in the counter pressure method, an air pressure in a die cavity during an injection filling is measured by a pressure sensor. With this arrangement, an excessive increase in an internal pressure of the die cavity is prevented, an injection speed is made constant, gas accumulation and poor foaming are prevented.
However, in the method for preventing an increase in the internal pressure in the cavity as disclosed in Patent Literature 2, a gas pressure in the cavity is set at 0 prior to a core-back starting time E. Accordingly, recesses on a surface caused by gas accumulation may not be sufficiently removed.

In a method disclosed in Patent Literature 3, after injecting a specific resin composition into a cavity pressurized to a specific pressure, a core-back operation is performed in a die to obtain an injection foam molded article.
However, in the method to depressurize the cavity before a core-back operation for forming a uniform closed cell as disclosed in Patent Literature 3, gas apart from a discharge position is pressed with resin pressure, so that the gas may not be fully discharged and provide a poor appearance to the injection foam molded article.

### CITATION LIST

### PATENT LITERATURES

Patent Literature 1: JP-A-2000-94483
Patent Literature 2: JP-A-2005-153446
Patent Literature 3: JP-A-2004-82547

### SUMMARY OF THE INVENTION

### PROBLEMS TO BE SOLVED BY THE INVENTION

As described above, in typical injection foam molding methods disclosed in Patent Literatures 1 to 3, gas accumulation causing surface recesses of an injection foam molded article cannot fully be prevented and a poor appearance such as surface recesses and a swirl mark may be provided. For this reason, when the typical injection foam molding methods are used for forming a member visible to a user (e.g., a door trim of automobiles), additional processing such as coating may be required.

In light of the above, an object of the invention is to provide an injection foam molding method for providing a favorable appearance by preventing gas accumulation and an apparatus thereof.

### MEANS FOR SOLVING THE PROBLEMS

According to an aspect of the invention, an injection foam molding method for forming an injection foam molded article by injecting a thermoplastic resin containing a foaming agent includes: clamping a die by bringing a movable die close to a fixed die to form a cavity; boosting a pressure in the cavity with gas to a level equivalent to or exceeding a saturation solubility pressure corresponding to an amount of a foaming gas mixed in the thermoplastic resin; injecting the thermoplastic resin comprising the foaming agent into the cavity; retaining the thermoplastic resin in the cavity; foaming the thermoplastic resin by a core-back operation of the movable die; reducing the pressure in the cavity to less than atmospheric pressure by vacuum-suctioning the cavity at the same time as start of the core-back operation or after the core-back operation; cooling the thermoplastic resin in the cavity; and demolding the injection foam molded article obtained by separating the movable die from the fixed die.

In the above aspect of the invention, in the reducing the pressure, it is preferable that a vacuum-suction is started before elapse of 2.5 seconds from the start of the core-back operation.
Moreover, in the above aspect of the invention, in the reducing the pressure, it is preferable that, with use of a vacuum suction device provided with a pump for vacuum-suctioning a vacuum tank in communication with the cavity via a valve, the vacuum tank depressurized by the vacuum pump driven by an operation of the valve is brought into communication with the cavity, thereby vacuum-suctioning the gas in the cavity.
Further, in the above aspect of the invention, in the reducing the pressure, it is preferable that a vacuum degree in the cavity is adjusted to -0.01 MPa or less after gas in the cavity is vacuum-suctioned.

According to another aspect of the invention, an injection foam molding apparatus for forming an injection foam molded article by injecting a thermoplastic resin comprising a foaming agent includes: a die comprising a fixed die and a movable die capable of approaching and separating from the fixed die, the movable die being brought close to the fixed die to clamp the die and form a cavity inside the die; a booster that boosts a pressure in the cavity, the booster provided in communication with the cavity of the die and capable of flowing gas into the cavity; a vacuum suction device provided with a vacuum tank, a pump that vacuum-suctions the vacuum tank and a flow path that includes a valve and communicates the vacuum tank with the cavity; and a controller that controls boosting the pressure in the cavity with the booster, injecting the thermoplastic resin containing the foaming agent into the cavity with the pressure boosted by the booster, retaining the thermoplastic resin in the cavity for a predetermined time, performing a core-back operation of the movable die after the retention for the predetermined time, and vacuum-suctioning the cavity to less than the atmospheric pressure by controlling the valve of the vacuum suction device to communicate the vacuum tank with the cavity at the same time as start of the core-back operation or after the core-back operation.

In the above aspect of the invention, it is preferable that a volume of the vacuum tank in the vacuum suction device is designed so that, after gas in the cavity is vacuum-suctioned, a vacuum degree of the vacuum tank becomes -0.01 MPa or less, in other words, a vacuum degree of the cavity becomes -0.01 MPa or less.
Moreover, in the above aspect of the invention, in the vacuum suction device, a vacuum degree of the vacuum tank before gas in the cavity is vacuum-suctioned is adjusted so that the vacuum degree of the vacuum tank becomes -0.01 MPa or less after gas in the cavity is vacuum-suctioned.

With this arrangement, since gas in the cavity is discharged under predetermined conditions, generation of a swirl mark and dimpled or amorphous recesses on the surface of the obtained injection foam molded article can be prevented.

### BRIEF DESCRIPTION OF DRAWINGS

Fig. 1 is a schematic block diagram showing an injection foam molding apparatus according to an exemplary embodiment of the invention.
Fig. 2 is an illustration schematically showing a molding condition of an injection foam molded article of this exemplary embodiment, in which a thermoplastic resin is injected.
Fig. 3 is an illustration schematically showing a molding condition of the injection foam molded article of this exemplary embodiment, in which a core-back operation is performed.
Fig. 4 is an illustration schematically showing a molding condition of the injection foam molded article of this exemplary embodiment, in which the injection foam molded article is demolded.
Fig. 5 is a timing chart showing molding conditions of the injection foam molded article of this exemplary embodiment.
Fig. 6 is a schematic block diagram partially showing an injection foam molding apparatus according to another exemplary embodiment of the invention.

### DESCRIPTION OF EXEMPLARY EMBODIMENT

An injection foam molding apparatus according to an exemplary embodiment of the invention will be described with reference to the attached drawings below.

### Structure of Injection Foam Molding Apparatus

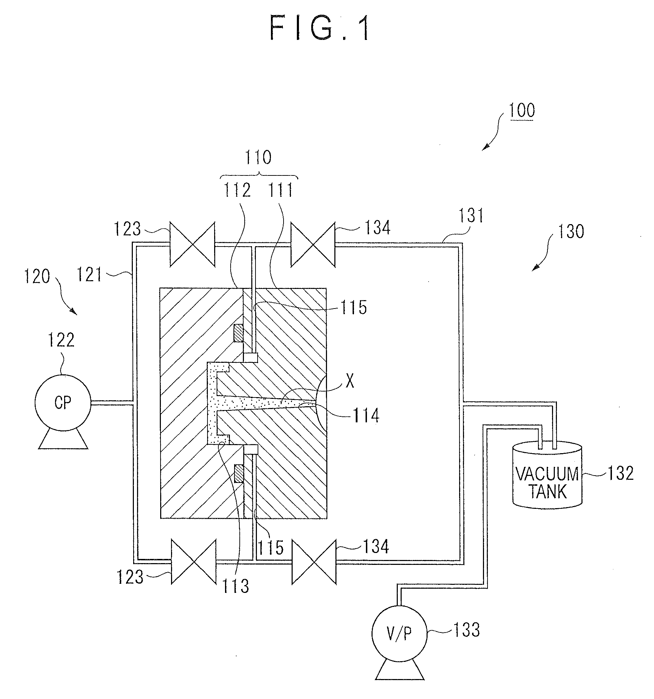

In Fig. 1, 100 represents an injection foam molding apparatus. The injection foam molding apparatus 100 molds a relatively thick and broad plate-like article by injection foaming. Examples of the article includes component members of an automobile such as a door trim, a bumper trim, an instrument panel trim, a hatchback trim and a deck-side trim next to a trunk. However, the invention is not limited to the plate-like molded article.
The injection foam molding apparatus 100 molds an article by foaming a thermoplastic resin containing a foaming agent by a core-back operation.
The injection foam molding apparatus 100 includes a heating cylinder (not shown), a die 110, a booster 120, a vacuum suction device 130, a controller (not shown) and the like. In this exemplary embodiment, the injection foam molding apparatus exemplarily has an automatically controllable structure with the controller. However, for instance, the injection foam molding apparatus may be manually adjusted by an operator.

The heating cylinder, for instance, includes a hopper into which a resin material (a thermoplastic resin) is fed, a cylinder in which the resin material is molten and kneaded, and a gas introduction path that introduces a foaming agent gas into the cylinder.
Under control of the controller, the heating cylinder heats and melts the resin material in the cylinder, kneads the resin material while applying an appropriate shear stress, and concurrently introduces a foaming agent gas into the cylinder, thereby preparing a thermoplastic resin including a foaming agent.

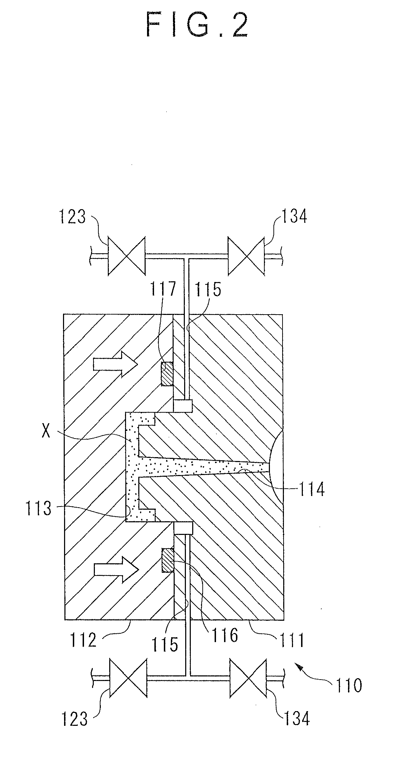

As shown in Figs. 1 and 2, the die 100 includes a fixed die 111, a movable die 112 capable of approaching and separating from the fixed die 111 under control of the controller, and the like. By bringing the movable die 112 close to the fixed die 111 to clamp the die 110, a cavity 113 is formed inside the die 110. The fixed die 111 includes a gate 114 through which a molten resin material X supplied from the heating cylinder is flowed into the cavity 113.
The fixed die 111 further includes a gas flow path 115 that is communicated with an inside of the cavity 113 and through which gas can be flowed. The gas flow path 115 is communicated with the cavity 113 via a fine clearance through which gas between the fixed die 111 and the movable die 112 can be flowed but the resin material X cannot be flowed.
As shown in Fig. 2, a seal recess 117 to which a seal member (e.g., an O-ring 116) is attached is provided on a surface of the movable die 112 facing the fixed die 111 in order to enclose the cavity 113, in other words, to seal gas in the cavity 113.

The booster 120 introduces gas into the cavity 113 of the die 110 and boosts a pressure in the cavity 113. Specifically, under control of the controller, the booster 120 introduces gas into the cavity 113 to boost the pressure therein to a pressure equivalent to or exceeding a saturation solubility pressure under which a foaming gas is soluble in the resin material X in a saturated state so that the molten resin material X is not foamed when injected to fill the cavity 113.
As shown in Fig. 1, the booster 120 includes a boost flow path 121 communicated with the gas flow path 115 of the die 110, a boost pump 122 provided to the boost flow path 121, and a boost valve 123 provided to the boost flow path 121 between the boost pump 122 and the gas flow path 115.
As the gas introduced by the booster 120, inert gas such as air, carbon dioxide gas and nitrogen gas are usable.

Under control of the controller, the vacuum suction device 130 vacuum-suctions the gas in the cavity 113 of the die 110.
As shown in Fig. 1, the vacuum suction device 130 includes a suction flow path 131 communicated with the gas flow path 115 of the die 110, a vacuum tank 132 provided to the suction flow path 131, a vacuum pump 133 that vacuum-suctions the vacuum tank 132, and a suction valve 134 provided to the suction flow path 131 between the vacuum tank 132 and the gas flow path 115.
In the vacuum suction device 130, it is preferable that a volume or a vacuum degree of the vacuum tank 132 before suction is adjusted so that, after the gas in the cavity 113 is vacuum-suctioned, the vacuum degree in the vacuum tank 132 becomes -0.01 MPa or less, in other words, the vacuum degree in the cavity 113 becomes -0.01 MPa or less.

The controller includes a CPU (Central Processing Unit) and the like and can control the operation of the entire injection foam molding apparatus 100.

### Resin Material

The resin material is exemplified by a foamable resin composition in which a thermoplastic material and a foaming agent are mixed. As the thermoplastic resin, any thermoplastic resin capable of injection foam molding is usable and is not specifically limited.
Examples of the thermoplastic resin includes: polyolefin resins such as polyethylene resins, polypropylene resins, poly-1-butene resins and polymethylpentene resins; polyester resins such as polyethylene terephthalate, polybutylene terephthalate and polyethylene naphthalate; polyamide resins such as nylon 6, nylon 9, nylon 10, nylon 11, nylon 12, nylon 46, nylon 66, nylon 610, nylon 611 and nylon 612; polyethers such as polyoxymethylene and polyphenylethers; styrene polymers such as polystyrene, acrylonitrile butadiene styrene (ABS) resins and acrylonitrile ethylene-propylene rubber styrene (AES) resins; carbonate polymers such as polycarbonates; and ethylene-polar resin copolymers such as polyvinyl chlorides, ethylene-vinyl acetate copolymers, ethylene-(meth)acrylic ester copolymers and ionomer resins.
Polyolefin resins are preferable as the thermoplastic resin, among which polyethylene resins and polypropylene resins are preferable in terms of cost performance, mechanical strength, moldability and the like and polypropylene resins are particularly preferable.
The polyolefin resins preferably have a melt flow rate (MFR) of 10 to 200 g/10 min, particularly 30 to 100 g/10 min, the melt flow rate being measured at 230 degrees C under a load of 2.16 kg in accordance with JIS K7210.

The thermoplastic resin such as polypropylene resins is used in one kind but also may be used in combination of two or more kinds.
The polypropylene resins may be propylene homopolymers or copolymers of propylene and a small amount of other α-olefins. When the polypropylene resins are copolymers, α-olefins having 2 to 10 carbon atoms such as ethylene, 1-butene, 1-pentene, 1-hexene, 1-octene, and 1-decene are preferably usable as a comonomer. The copolymers may be random copolymers or block copolymers. A contained amount of the comonomer is 10 mol%, preferably 5 mo% or less.
Since propylene block copolymers are excellent in rigidity, mechanical strength and low-temperature impact resistance as compared with other polypropylene resins, the propylene block copolymers are particularly suitable in use as interior and exterior parts of automobiles. A particularly preferred example of the propylene block copolymers is a composition including: random copolymers of propylene and ethylene which are paraxylene solubles at room temperature; and a polypropylene portion.
The polypropylene resins preferably have an MFR of 30 to 200 g/10 min, particularly 60 to 120g/10 min. When the MFR is within this range, a poor appearance such as swirl marks is prevented and an injection foam molded article having a better appearance can be obtained.
The polypropylene resins preferably have a density of 0.890 to 0.920 g/cm³, more preferably 0.900 to 0.910 g/cm³.

The polypropylene resins preferably have an isotactic pentad fraction (mmmm fraction) of 97% or higher, more preferably 97.5% or higher, the isotactic pentad fraction being measured by a method using ¹³C-NMR. When the isotactic pentad fraction is high, crystallinity of the resins is high, so that an injection foam molded article having a higher rigidity can be obtained.
An isotactic pentad fraction represents a ratio of existing isotactic chains of pentad units in the thermoplastic resin molecular chain, which is measured by the method using ¹³C-NMR. In other words, the isotactic pentad fraction represents a fraction of a propylene monomer unit which is at the center of the chain in which five propylene monomer units are metho-bonded successively. Specifically, the isotactic pentad fraction is a value calculated in terms of a fraction of an mmmm peak in the whole absorption peaks in the methyl-carbon region observed on the ¹³C-NMR spectrum. The polypropylene resins may contain a branched olefin polymer of 0.1 mass% or less, preferably 0.05 mass% or less. The branched olefin polymer, which works as a nucleating agent of the polypropylene resins, increases the isotactic pentad fraction to improve moldability. Examples of the branched olefin copolymer are a homopolymer or a copolymer of 3-methyl-1-butene, 3,3-dimetyl-1-butene, 3-methyl-1-pentene, 4-methyl-1-pentene and the like. Particularly, a 3-methyl-1-butene polymer is preferable.

The polypropylene resins can be manufactured by a known method with use of a known catalyst. For instance, the polypropylene resins can be obtained by performing the following in any order: in the presence of catalytic system including a solid titanium catalyst component that includes magnesium, titanium, halogen and an electron donor, an organic aluminum compound and an electron donor, formation of a thermoplastic resin component by polymerizing propylene; and formation of an ethylene α-olefin copolymer component by copolymerizing ethylene and α-olefins having 3 to 20 carbon atoms. For polymerization, various methods such as a gas phase polymerization method, a solution polymerization method and a slurry polymerization method are usable.
The solid titanium catalyst component in the catalyst can be prepared by contacting: a tetravalent titanium compound such as tetra-halogenated titanium, halogenated alkoxytitanium or tetraalkoxytitanium; at least one electron donor selected from the group consisting of an oxygen-containing compound or a nitrogen-containing compound such as alcohol, phenol, ketone, aldehyde, ester, ether, amine, nitrile and acid; and a halogen-containing magnesium compound.
The organic aluminum compound in the catalyst can be appropriately selected in use from trialkylaluminum, halogenated alkylaluminum, alkylalkoxyaluminum and halogenated alkoxyaluminum.
As the electron donor in the catalyst, an alkoxysilane compound or polyether compound are usable.

The resin material as the thermoplastic resin containing the foaming agent used in the invention can be added with various resins, an elastomer, an inorganic filler, an additive and like as needed as long as an object of the invention is not impaired.
Examples of the inorganic filler are talc, silica, mica, calcium carbonate, glass fibers, glass beads, barium sulfate, magnesium hydrate, wollastonite, calcium silicate fibers, carbon fibers, magnesium oxysulfate fibers, calcium titanate fibers, titanium oxide, calcium sulfite, white carbon, clay and calcium sulfate. These inorganic fillers are used in one kind but also may be used in combination of two or more kinds.
As the additive, known additives such as a nucleating agent, antioxidant, hydrochloric acid absorbent, heat stabilizer, weathering stabilizer, light stabilizer, UV absorbent, slip agent, anti-blocking agent, anti-fog additive, lubricant, antistatic agent, flame retardant, pigment, dye, dispersant, copper inhibitor, neutralizer, plasticizer, cell inhibitor, crosslinking agent, flow improver such as peroxides, weld strength improver, natural oil, synthetic oil and wax are usable.

As the foaming agent contained in the thermoplastic resin, various known foaming agents are usable. For instance, any one of a solvent-type foaming agent, decomposable foaming agent and gaseous foaming agent is usable.
Usable as the solvent-type foaming agent or gaseous foaming agent is a substance functioning as a foaming agent in the cavity 113 of the die 110 when being injected therein by a cylinder portion of a heating cylinder and being absorbed or dissolved in a molten thermoplastic resin. For example, carbon dioxide; an inert gas such as nitrogen gas and argon gas; an aliphatic hydrocarbon having a low boiling point such as propane, butane, neopentane, heptane, isohexane, hexane and isoheptane; and a fluorine-containing hydrocarbon having a low boiling point represented by chlorofluorocarbon are usable. The gaseous foaming agent may be injected into the thermoplastic resins in a supercritical state.
Usable as the decomposable foaming agent is a compound that is mixed in the thermoplastic resin before being supplied into the heating cylinder and is decomposed under temperature conditions in the cylinder to generate gas such as carbon dioxide or nitrogen gas. An inorganic foaming agent and an organic foaming agent are usable as the decomposable foaming agent. Moreover, an organic acid such as citric acid may be added together to promote uniform and fine cell foaming.
Examples of the inorganic foaming agent are sodium bicarbonate, ammonium carbonate, ammonium bicarbonate, sodium carbonate, ammonium nitrite, citric acid and sodium citrate. Examples of the organic foaming agent are an azo compound such as azodicarbonamide, azobisisobutyronitrile, azocyclohexylnitrile, azodiaminobenzene and barium azodicarboxylate; an N-nitroso compound such as N,N'-dinitrosopentamethylenetetramine and N,N'-dinitrosoterephthalamide; a sulfonylhydrazide compound such as benzensulfonyl hydrazide, toluenesulfonyl hydrazide, p,p'-oxybisbenzenesulfonyl hydrazide, diphenylsulfone-3,3'-disulfonyl hydrazide; and an azide compound such as calcium azide, 4,4'-diphenyldisulfonyl azide, and p-touluenesulfonyl azide.
Among these decomposable foaming agents, a carbonate or hydrogen carbonate such as sodium bicarbonate and sodium carbonate is preferable. An organic carboxylate is preferably used together as a foaming auxiliary. A blend ratio of the carbonate or hydrogen carbonate to the organic carboxylate is 80 to 25 parts by mass of the carbonate or hydrogen carbonate, preferably 65 to 30 parts by mass relative to 20 to 75 parts by mass of the organic carboxylate, preferably 35 to 70 parts by mass, in which a total of the carbonate or hydrogen carbonate and the organic carboxylate is 100 parts by mass.

An added amount of the foaming agent is in a range of 0.1 to 6 parts by mass based on 100 parts by mass of the thermoplastic resin, preferably of 0.5 to 2 parts by mass. By adding the foaming agent within this range, an injection foam molded article having a more uniform cell diameter can be obtained.
The added amount of the foaming agent is determined depending on physical properties of the injection foam molded article in view of a gas generation amount from the foaming agent, a desirable expansion ratio and the like.

### Operation of Injection Foam Molding Apparatus

Next, an injection foam molding method as an operation of the injection foam molding apparatus will be explained.

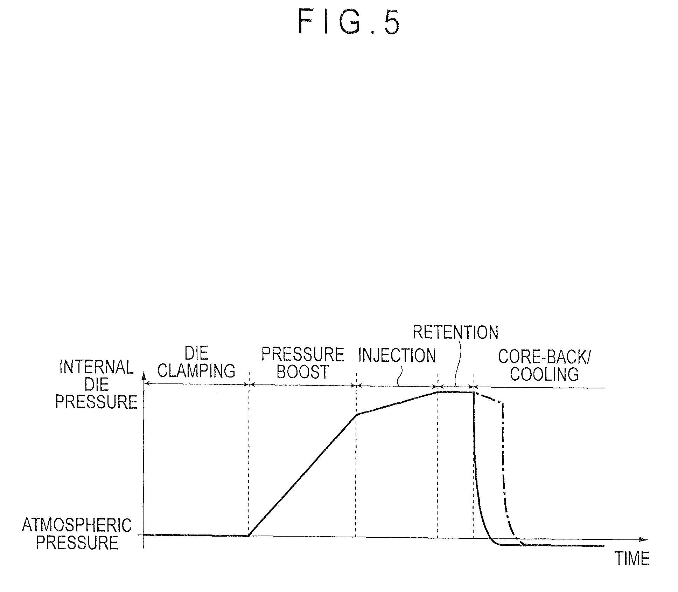

Fig. 5 is a timing chart showing a molding condition of the injection foam molded article, in which a vertical axis represents an internal die pressure that is a pressure in the cavity relative to the atmospheric pressure and a horizontal axis represents time.
The injection foam molding method includes die clamping, pressure boost, injection, retention, foaming, pressure reduction, cooling and demolding.

### Die Clamping

First, as shown in Fig. 2, the fixed die 111 and the movable die 112 are brought close to each other for a die clamping with high pressure.
The cavity 113 formed by this die clamping occupies, for instance, 10 to 95% of an expected volume of the injection foam molded article. In other words, an expansion ratio of the injection foam molded article is set at 1.05 to 10, preferably 1.5 to 5.

### Pressure Boost

In this state, the boost pump 122 of the booster 120 is driven to open the boost valve 123 and gas such as air, carbon dioxide gas and nitrogen gas is fed from the boost flow path 121 into the cavity 113 through the gas flow path 115 of the die 110.
With the fed gas, a pressure within the cavity 113 is boosted to a predetermined pressure, i.e., a pressure equivalent to or exceeding a saturation solubility pressure of a foaming gas in the resin material X of the thermoplastic resin containing a foaming agent. The saturation solubility pressure depends on a type of a foaming gas, an amount thereof, a resin material and a temperature thereof. For instance, when the foaming gas is carbon dioxide, the amount thereof is 0.4 mass%, the resin material is a propylene block copolymer including polypropylene components, and the temperature of the resin material is 200 degrees C, the saturation solubility pressure is 0.56 MPa.
The boost valve 123 is closed when the boosted pressure within the cavity 113 reaches a predetermined internal die pressure

### Injection

After the pressure boost, as shown in Fig. 2, the resin material X, which is separately prepared by melting and kneading the thermoplastic resin and the foaming agent in the heating cylinder, is injected into the cavity 113 through the gate 114 of the die 110.
Most of the gas in the cavity 113 is squeezed into a space between the cavity 113 and a gas seal portion.
For injecting the resin material X, it is suitable that a preset temperature of a tip end of the heating cylinder is higher than a preset temperature of the hopper thereof, for instance, by 20 to 100 degrees C, preferably 20 to 70 degrees C, more preferably 30 to 60 degrees C. With this arrangement, foaming of the resin material X in the cylinder is prevented, so that the resin material X in an unfoamed state can be injected into the cavity 113.
For preventing the resin material X from foaming in the cylinder, a back pressure of the heating cylinder is set at 5 MPa or more, preferably 7 MPa or more, more preferably 10 MPa or more.
When the volume of the cavity 113 of the die 110 is less than 10% of the expected volume of the injection foam molded article, a gradient of a pressure applied on the resin material X at the time of injection may become excessive to cause difficulty in feeding the resin material X uniformly. On the other hand, when the volume of the cavity 113 is more than 95% of the expected volume of the injection foam molded article, the pressure applied on the resin material X at the time of injection may be lowered to start foaming and generate swirl marks or recesses on a surface of the injection foam molded article.

### Retention

After the resin material X is injected at the time of the injection, the resin material X is retained in the cavity 113. Specifically, the volume of the cavity 113 is retained without any change for several seconds to form a skin layer. At this time, a temperature of the die 110 is suitably in a range of 30 to 70 degrees C.
Such a retention time is appropriately determined depending on the temperature of the die 110, a type of the resin material X, a shape of the injection foam molded article, a thickness of the skin layer and the like. Typically, the retention time is approximately in a range of 1 second to 20 seconds. The thickness of the skin layer is approximately in a range of 0.2 mm to 2 mm, preferably of 0.2 mm to 1 mm.

### Foaming

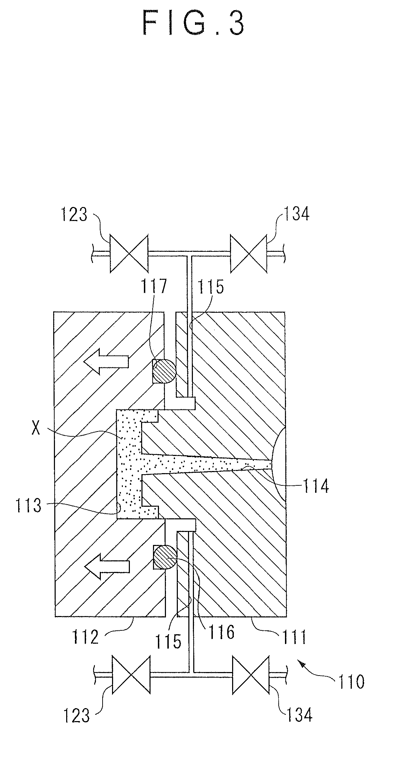

As shown in Fig. 3, after the retention, a core-back operation for expanding the volume of the cavity 113 by retracting the movable die 112 is performed to make the resin material X foam.
A retraction speed of the movable die 112 is, for instance, in a range of 0.1 to 50 mm/s, preferably of 0.5 to 30 mm/s. A retraction time of the movable die 112 from start to finish is, for instance, in a range of 0.01 second to 5 seconds, preferably of 0.05 second to 3 seconds. Under such conditions, a favorable appearance of the injection foam molded article can easily be obtained.

### Pressure Reduction

After the foaming, at the same time as the start of the core-back operation (a solid line in Fig. 5) or after the elapse of a predetermined time from the start of the core-back operation (a dashed-dotted line in Fig. 5), the suction valve 134 of the vacuum suction device 130 is opened. Then, the vacuum tank 132 adjusted to have a predetermined vacuum degree is brought into communication with the cavity 113, whereby the gas in the cavity 113 is suctioned and discharged into the vacuum tank 132 to make the pressure in the cavity 113 less than the atmospheric pressure as shown in Fig. 5. Before the suction valve 134 is opened, the vacuum tank 132 is vacuum-suctioned so that the vacuum degree of the vacuum tank 132 becomes a predetermined vacuum degree, in other words, the vacuum degree of the vacuum tank 132 becomes -0.01 MPa or less after the suction and discharge. Examples of the gas to be vacuum-suctioned are gas used for the pressure boost and the foaming gas existing in the cavity 113.

### Cooling

After the pressure reduction, the resin material X in the cavity 113 is cooled down.
Specifically, after the pressure reduction, the die 110 is retained without any change of the volume of the cavity 113 and the resin material X is cooled down. As conditions for this cooling, a cooling time is appropriately determined depending on a shape of the injection foam molded article and the like.
After the foaming, the injection foam molded article is obtained not only by the above-described cooling without any change but also, after a cooling, for instance, in a range of 0 second to 60 seconds, preferably 1 second to 10 seconds, by advancing the movable die 112 for clamping the die to adjust the die to have a predetermined size with compression. With compression, a surface of the injection foam molded article that becomes out of contact with a molding die because of volume shrinkage of the injection foam molded article is again brought into contact with the molding die, thereby improving a cooling efficiency. Moreover, by regulating the shape of the injection foam molded article in the molding die, deformation after removal is prevented, thereby providing a favorable appearance.

### Demolding

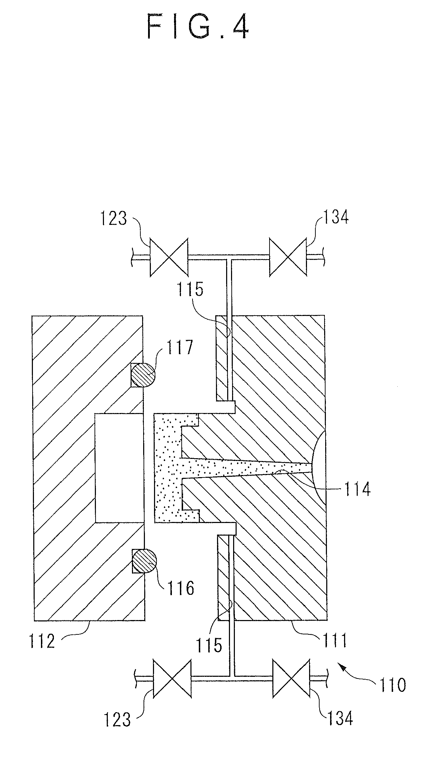

As shown in Fig. 4, the movable die 112 is separated away from the fixed die 111 and a finished injection foam molded article is removed from the die 110.

### Advantages of Exemplary Embodiment

As described above, in this exemplary embodiment, the following advantages can be attained.
In this exemplary embodiment, after gas is introduced into the cavity 113 formed by clamping the die to boost pressure therein, the resin material X, which is the thermoplastic resin containing the foaming agent, is injected to form the skin layer. Subsequently, at the same time as the start of the core back or after the elapse of a predetermined time from the start of the core back, the gas in the cavity 113 is vacuum-suctioned to make the pressure in the cavity 113 less than the atmospheric pressure and the resin material X is cooled and solidified.
Thus, since the gas is vacuum-suctioned before the resin material X is completely solidified, the gas between the resin material X and an inner surface of the die 110 is reliably discharged out of the cavity 113, which reliably prevents a poor appearance caused by generation of recesses and swirl marks on a surface of the injection foam due to gas accumulation by the residual gas.

In this exemplary embodiment, at the pressure boost to boost the pressure in the cavity 113 by introducing gas, the pressure in the cavity 113 is boosted to a level equivalent to or exceeding the saturation solubility pressure corresponding to an amount of the foaming gas mixed in the resin material X.
Accordingly, when the resin material X is injected into the cavity 113 at the following injection, the resin material X is fed in an unfoamed state, thereby reliably preventing generation of swirl marks and a poor appearance.

Moreover, in this exemplary embodiment, at the pressure reduction, a vacuum-suction is started during the time before the elapse of 2.5 seconds from the start of the core-back operation
Accordingly, since the gas is reliably discharged before the resin material X is completely solidified, a poor appearance can be more reliably prevented.

Further, in this exemplary embodiment, with use of the vacuum suction device 130 provided with the vacuum pump 133 for vacuum-suctioning the vacuum tank 132 in communication with the cavity 113 via the suction valve 134, the vacuum tank 132 depressurized by the vacuum pump 133 driven by an operation of the suction valve 134 is brought into communication with the cavity 113, thereby vacuum-suctioning the gas in the cavity 113.
Accordingly, the gas can be suitably vacuum-suctioned with a simple arrangement and the gas recovered to the vacuum tank 132 can be easily recycled, thereby reducing costs. Further, only by adjusting the volume and the vacuum degree of the vacuum tank 132, the pressure in the cavity 113 can be suitably and easily vacuum-suctioned to less than the atmospheric pressure, thereby improving productivity. Moreover, the volume and the vacuum degree of the vacuum tank 132 can be determined depending on a shape of an injection foam molded article to be produced, thereby improving versatility.

In this exemplary embodiment, after the gas in the cavity 113 is vacuum-suctioned, the vacuum degree of the vacuum tank 132 is adjusted to -0.01 MPa or less, in other words, the vacuum degree in the cavity 113 is adjusted to -0.01 MPa or less.
Thus, the gas between the resin material X and the inner surface of the die 110 can be reliably discharged even with a simple structure, thereby reliably preventing a poor appearance.

### Modifications of Exemplary Embodiment

It should be understood that the scope of the present invention is not limited to the above-described exemplary embodiment but includes modifications and improvements as long as the modifications and improvements are compatible with the invention. Further, the specific arrangements and configurations may be altered in any manner as long as the modifications and improvements are compatible with the invention.

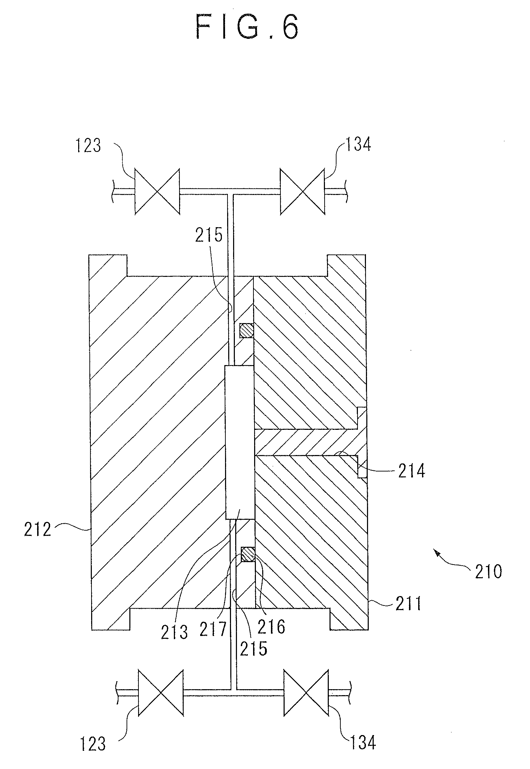

For instance, at the pressure reduction, the gas is vacuum-suctioned at the start of the core-back operation or before the elapse of 2.5 seconds from the start, but may be vacuum-suctioned before completion of solidification of the injected resin material X after the start of the core-back operation.
At the pressure boost, a boosting pressure may be equivalent to or exceeding the saturation solubility pressure corresponding to the amount of the mixed foaming gas.
As the structure for vacuum-suctioning the gas at the pressure reduction, not only the above-described vacuum suction device 130 but also various structures are usable. Although the vacuum tank 132 is vacuumed beforehand so that the vacuum degree of the vacuum tank 132 after the vacuum-suction of the gas becomes -0.01 MPa or less, the vacuum pump 133, for instance, may be driven as required so as to keep the vacuum degree of the vacuum tank 132 -0.01 MPa or less during the vacuum suction.
The injection foam molded article is applicable not only to components of automobiles but also in a household equipment field and the like.
In the above exemplary embodiment, the structure with use of the die 110 in which the volume of the cavity 113 varies is exemplarily described. However, a typical die 210 shown in Fig. 6 may be used. Specifically, by bringing a movable die 212 close to a fixed die 211 to clamp the die 210 shown in Fig. 6, a cavity 213 is formed inside the die 210. The fixed die 211 is provided with a gate 214. The movable die 212 is provided with a gas flow path 215 and a seal recess 217 to which, for instance, an O-ring 216 is attached.
For production, after the molten resin material X is injected into the cavity 213, the resin material X is retained and a core-back operation is performed to the movable die 212. At the same time as the start of the core-back operation or after the elapse of a predetermined time from the start of the core-back operation, a pressure reduction is performed. Since a skin layer formed at this time causes gas between the movable die 212 and the resin material X to be discharged, a favorable injection foam molded article can be obtained without a poor appearance on a surface in contact with the movable die 212.
Here, air suction from outside of the die 210 can be prevented by selecting the O-ring 216 having such a size as to maintain gas sealing between the fixed die 211 and the movable die 212 after the core-back operation.

Specific structures and shapes in implementing the invention may be other structures or the like as long as the object of the invention can be attained.

### Examples

The invention will further be described below with reference to Examples and Comparisons.
The invention is not limited to details of Examples and the like.

### Example 1

### (1) Manufacturing Machine

A die having a cavity size of 850 x 450 mm was used for obtaining an injection foam molded article shaped like a door trim, as shown in Fig. 1. The die was adjusted such that a thickness of the cavity when the die was completely closed became 1.6 mm.
The periphery of the cavity in the die forms a shear edge structure. A looped gas flow path having a width of 5 mm and a height of 15 mm was provided in an outer circumference near a base end of a convex portion in the fixed die. The gas flow path was interconnected to the cavity through a gap of the shear edge. A rubber seal member (an O-ring) was further provided in an outer circumference of the gas flow path. Accordingly, gas sealing in the cavity and the gas flow path was attained by bringing the movable die and the seal member into contact with each other in a die-clamped state.
The gas flow path was also connected to the booster and the vacuum suction device as shown in Figs. 1 and 2 so that the pressure boost and the vacuum suction in the cavity were possible.
A molding machine had a structure where carbon dioxide in a gas state, as a foaming agent, was introduced to the middle of a cylinder in which a material resin was molten and the molten resin and the carbon dioxide were kneaded and dissolved by rotation of a screw.
The die had a structure where the molten resin was injected through four direct gates of valve gate specification. The die was attached to an injection molding machine (manufactured by UBE INDUSTRIES, LTD., model: MD850S-III) capable of finely adjusting the cavity gap of the die. The injection molding machine was manufactured under conditions: a die temperature of 50 degrees C; a cooling time of 30 seconds; a back pressure at measurement of 5.0 MPa; and a resin material temperature at injection of 200 degrees C.

### Resin Material

As the polypropylene resin (the molding material), a polypropylene block copolymer (product name: FX200S, manufactured by PRIME POLYMER CO., LTD., MFR: 60 g/10 min (230 degrees C)) was used. Air was used as gas to boost pressure in the cavity

### (3) Molding Method

Due to sealing of the surrounding of the cavity, an internal pressure of the cavity was boosted to approximately 0.6 MPa with a pressurized air after die clamping. In this state, a molten polypropylene resin was injected thereinto for 1 second, the resin having been prepared through introduction of carbon dioxide as a foaming gas at 0.4 mass%, followed by kneading and dissolving. With maintaining the internal gas pressure of the cavity, after the elapse of 1 second from the injection, the movable die was retracted at a retraction amount of 1.4 mm and a retraction speed of 20 mm/s so that the volume of the cavity was enlarged. At this time, a saturation solubility pressure was 0.56 MPa.
With a timer setting elapsed time since completion of the injection, the boost valve of the gas-supplying booster was closed and the suction valve of the vacuum suction device was opened, whereby the gas in the cavity was suctioned by the vacuum tank. As the vacuum tank of the vacuum suction device, a 100-litre vacuum tank with a vacuometer was used. The vacuum degree of the vacuum tank before vacuum suction of the gas was - 0.07 MPa. The vacuum degree of the vacuum tank after the vacuum suction of the gas was -0.02 MPa.
Subsequently, after cooling for 30 seconds, an injection foam molded article was obtained.

### Examples 2 to 5, Comparisons 1 to 6

An injection foam molded article was obtained in the same manner as in Example 1 except for the added amount of CO₂, the internal pressure of the cavity, the timing of gas discharging (time from completion of the injection to vacuum suction), the status of performance of vacuum suction and the vacuum degree, which are shown in Tables 1 and 2.
A saturation solubility pressure in each of Examples 2 and 3 and Comparisons 1 to 4 was the same as that in Example 1. A saturation solubility pressure in each of Example 4 and Comparison 5 was 0.42 MPa. A saturation solubility pressure in each of Example 5 and Comparison 6 was 0.31 MPa.

### Evaluation

Generation of swirl marks and presence/absence of dimpled or amorphous recesses on a surface of the obtained injection foam molded article were visually observed and evaluated on the following three scales. Results are shown in Tables 1 and 2 below.
A: absence of swirl marks or recesses
B: slight presence of swirl marks or recesses
C: presence of swirl marks or recesses

**[Table 1]**

| | Example 1 | Example 2 | Example 3 | | Comparison 1 | Comparison 2 | Comparison 3 |
|---|---|---|---|---|---|---|---|
| CO₂ amount (mass%) | 0.4 | 0.4 | 0.4 | | 0.4 | 0.4 | 0.4 |
| cavity internal pressure (MPa) | 0.6 | 0.6 | 0.6 | | 0.6 | 0.6 | 0.3 |
| discharging timing *1 | 1 sec later | 3 sec later | 4 sec later | | 1 sec later | 0 sec | 1 sec later |
| vacuum suction | performed | performed | performed | | not | performed | performed |
| vacuum degree (MPa) *2 | -0.07 | -0.07 | -0.07 | | - | -0.07 | -0.07 |
| vacuum degree (MPa) *3 | -0.02 | -0.02 | -0.02 | | - | -0.02 | -0.02 |
| swirl marks | A | A | A | | A | A | C |
| dimpled recesses | A | A | B | | B | C | A |
| amorphous recesses | A | A | B | | C | B | A |
| remarks | vacuum suction at the same time as core-back | vacuum suction after 2 sec after core-back | vacuum suction after 3 sec after core-back | | no vacuum suction | vacuum suction before core-before core-back | - |

| | | | | | | | |
|---|---|---|---|---|---|---|---|
| *1: time from completion of injection to vacuum suction *2: vacuum degree of the vacuum tank before vacuum suction *3: vacuum degree of the vacuum tank after vacuum suction | | | | | | | |

**[Table 2]**

| | Example 1 | Example 4 | Example5 | | Comparison 4 | Comparison 5 | Comparison 6 |
|---|---|---|---|---|---|---|---|
| CO₂ amount (mass%) | 0.4 | 0.3 | 0.2 | | 0.4 | 0.3 | 0.2 |
| cavity internal pressure (MPa) | 0.6 | 0.5 | 0.4 | | 0.6 | 0.5 | 0.4 |
| discharging timing *1 | 1 sec later | 1 sec later | 1 sec later | | 1 sec later | 1 sec later | 1 sec later |
| vacuum suction | performed | performed | performed | | performed | performed | performed |
| vacuum degree (MPa) *2 | -0.07 | -0.05 | -0.06 | | -0.05 | -0.04 | -0.03 |
| vacuum degree (MPa) *3 | -0.02 | -0.01 | -0.01 | | 0 | >0 | >0 |
| swirl marks | A | A | A | | A | A | A |
| dimpled recesses | A | A | A | | B | C | C |
| amorphous recesses | A | A | A | | C | C | C |
| remarks | vacuum suction at the same time as core-back | vacuum suction at the same time as core-back | vacuum suction at the same time as core-back | | deficient vacuum degree | deficient vacuum degree | deficient vacuum degree |

| | | | | | | | |
|---|---|---|---|---|---|---|---|
| *1: time from completion of injection to vacuum suction *2: vacuum degree of the vacuum tank before vacuum suction *3: vacuum degree of the vacuum tank after vacuum suction | | | | | | | |

### (5) Results

As shown in the results of Tables 1 and 2, a molded article without swirl marks and dimpled or amorphous recesses on its surface was obtained by boosting the pressure in the cavity to a level equivalent to or exceeding the saturation solubility pressure corresponding to the amount of the foaming gas mixed in the thermoplastic resin and vacuum-suctioning the cavity to less than the atmospheric pressure at the same time as the start of the core-back operation or after the core-back operation.

### INDUSTRIAL APPLICABILITY

An injection foam molded article obtained in the invention has a favorable appearance provided by preventing surface recesses caused by gas accumulation and is suitable for interior and exterior materials and the like in a household equipment field and an automobile field.

### EXPLANATION OF CODES

- 100:: injection foam molding apparatus
- 110:: die
- 111:: fixed die
- 112:: movable die
- 113:: cavity
- 120:: booster
- 130:: vacuum suction device
- 131:: suction flow path
- 132:: vacuum tank
- 133:: vacuum pump
- 134:: suction valve
- X:: resin material as a thermoplastic resin containing a foaming agent

## Claims

1. An injection foam molding method for forming an injection foam molded article by injecting a thermoplastic resin comprising a foaming agent, the injection foam molding method comprising:
clamping a die by bringing a movable die close to a fixed die to form a cavity;
boosting a pressure in the cavity with gas to a level equivalent to or exceeding a saturation solubility pressure corresponding to an amount of a foaming gas mixed in the thermoplastic resin;
injecting the thermoplastic resin comprising the foaming agent into the cavity;
retaining the thermoplastic resin in the cavity;
foaming the thermoplastic resin by a core-back operation of the movable die;
reducing the pressure in the cavity to less than atmospheric pressure by vacuum-suctioning the cavity at the same time as start of the core-back operation or after the core-back operation;
cooling the thermoplastic resin in the cavity; and
demolding the injection foam molded article obtained by separating the movable die from the fixed die.

2. The injection foam molding method according to claim 1, wherein
in the reducing the pressure, a vacuum-suction is started before elapse of 2.5 seconds from the start of the core-back operation.

3. The injection foam molding method according to claim 1 or 2, wherein
in the reducing the pressure, with use of a vacuum suction device provided with a pump for vacuum-suctioning a vacuum tank in communication with the cavity via a valve, the vacuum tank depressurized by the vacuum pump driven by an operation of the valve is brought into communication with the cavity, thereby vacuum-suctioning the gas in the cavity.

4. The injection foam molding method according to claim 3, wherein
in the reducing the pressure, a vacuum degree in the cavity is adjusted to -0.01 MPa or less after gas in the cavity is vacuum-suctioned.

5. An injection foam molding apparatus for forming an injection foam molded article by injecting a thermoplastic resin comprising a foaming agent, the injection foam molding apparatus comprising:
a die comprising a fixed die and a movable die capable of approaching and separating from the fixed die, the movable die being brought close to the fixed die to clamp the die and form a cavity inside the die;
a booster that boosts a pressure in the cavity, the booster provided in communication with the cavity of the die and capable of flowing gas into the cavity;
a vacuum suction device provided with a vacuum tank, a pump that vacuum-suctions the vacuum tank and a flow path that includes a valve and communicates the vacuum tank with the cavity; and
a controller that controls boosting the pressure in the cavity with the booster, injecting the thermoplastic resin containing the foaming agent into the cavity with the pressure boosted by the booster, retaining the thermoplastic resin in the cavity for a predetermined time, performing a core-back operation of the movable die after the retention for the predetermined time, and vacuum-suctioning the cavity to less than the atmospheric pressure by controlling the valve of the vacuum suction device to communicate the vacuum tank with the cavity at the same time as start of the core-back operation or after the core-back operation.

6. The injection foam molding apparatus according to claim 5, wherein
a volume of the vacuum tank in the vacuum suction device is designed so that a vacuum degree of the vacuum tank becomes -0.01 MPa or less after gas in the cavity is vacuum-suctioned.

7. The injection foam molding apparatus according to claim 5, wherein
in the vacuum suction device, a vacuum degree of the vacuum tank before gas in the cavity is vacuum-suctioned is adjusted so that the vacuum degree of the vacuum tank becomes -0.01 MPa or less after gas in the cavity is vacuum-suctioned.
